# FASCICULE DE BREVET EUROPEEN

(11) **EP 2 325 056 B1**
(45) Date de publication et mention de la délivrance du brevet: **02.01.2013**
(21) Numéro de dépôt: 10306279.0
(22) Date de dépôt: 19.11.2010
(51) Int. Cl.: B60R 19/03, B60R 19/18, B60R 21/34, B62D 21/15

(54) **Bouclier pare-chocs pour véhicule automobile**
Verformbarer Stoßfänger für Kraftfahrzeug
Bumper shield for an automobile

(30) Priorité: 20.11.2009 FR 0958235
(43) Date de publication de la demande: 25.05.2011
(73) Titulaire: Faurecia Bloc Avant, 92000 Nanterre (FR)
(72) Inventeur: Gonin, Vincent, 37540, SAINT CYR SUR LOIRE (FR)
(74) Mandataire: Domenego, Bertrand

(56) Documents cités:
- EP-A1- 1 293 389
- EP-A1- 1 884 416
- EP-A2- 1 072 476
- FR-A1- 2 895 341
- FR-A1- 2 896 222
- FR-A1- 2 912 371
- JP-A- 2007 203 777

## Description

La présente invention concerne un bouclier pare-chocs pour véhicule automobile comprenant deux longerons principaux, deux longerons auxiliaires disposés à une hauteur inférieure, ainsi que des platines d'appui et de fixation disposées entre les extrémités des longerons.

Les véhicules automobiles modernes sont conçus pour répondre de façon convenable à différents types de chocs frontaux possibles, tels que les chocs à petite vitesse ou « chocs parking », pour une vitesse comprise entre 2,5 et 4 km/h (ECE42), les chocs à moyenne vitesse ou « chocs réparabilité », pour une vitesse d'environ 16 km/h (Danner) et les chocs à grande vitesse, pour une vitesse comprise entre 56 et 65 km/h.

Les véhicules automobiles modernes sont également conçus pour protéger les piétons en cas de choc piéton, et en particulier pour protéger les jambes et la hanche du piéton.

Il est possible de prévoir un ensemble avant comprenant une poutre pare-chocs supérieure métallique fixée aux extrémités de longerons principaux avant d'une voie haute (brancards principaux) par l'intermédiaire de premiers absorbeurs de chocs métalliques rapportés sur la poutre pare-chocs supérieure, et une poutre pare-chocs inférieure fixée aux extrémités de longerons auxiliaires avant d'une voie basse (par exemple des prolonges de berceau) par l'intermédiaire de second absorbeurs de chocs métalliques ou en matière plastique, rapportés sur la poutre pare-chocs inférieure.

Néanmoins, un tel ensemble avant est compliqué et coûteux à fabriquer et à installer.

EP-A1-1 293 389 décrit un système d'absorption d'énergie pour véhicule automobile constitué par un cadre disposé à l'avant du véhicule. Le cadre est constitué par une poutre supérieure et une poutre basse, la poutre supérieure étant en appui contre les longerons du véhicule et la poutre basse étant en appui contre les prolonges du berceau moteur.

Un but de l'invention est de proposer un bouclier pare-chocs permettant de répondre de manière convenable aux chocs piétons et aux chocs à petite et moyenne vitesse, tout en étant simple et en présentant un coût de fabrication faible.

A cet effet, l'invention propose un bouclier pare-chocs du type précité, caractérisé en ce qu'il est monobloc en matière plastique et formé de deux montants et d'une poutre inférieure reliant les montants, les montants étant configurés pour prendre appui sur les platines de manière à faire office d'absorbeurs de chocs, la poutre inférieure étant sensiblement à hauteur des longerons auxiliaires et le bouclier ayant une forme en U conférée par les montants et la poutre inférieure.

Selon d'autres modes de réalisation, le bouclier pare-chocs comprend une ou plusieurs des caractéristiques suivantes, prise(s) isolément ou selon toutes les combinaisons techniquement possibles :
- les montants possèdent une épaisseur comprise entre 120 et 220 mm ;
- les montants présentent une structure alvéolaire formée d'alvéoles s'étendant longitudinalement au travers des montants et débouchant sur la face arrière et/ou avant du bouclier ;
- chaque montant comprend des premières alvéoles borgnes, fermées du côté de la face arrière et ouvertes du côté de la face avant, et des deuxièmes alvéoles borgnes ouvertes du côté de la face arrière et fermées du côté de la face avant ; et
- le bouclier pare-chocs comprend au moins une nervure d'absorption piéton faisant saillie vers l'extérieur à partir d'un montant.

L'invention a également pour objet un ensemble de véhicule automobile comprenant deux longerons principaux et deux longerons auxiliaires disposés à une hauteur inférieure et des platines d'appui et de fixation disposées aux extrémités des longerons, lequel comprend un bouclier pare-chocs tel que défini ci-dessus, les montants étant fixés en appui rigide contre les platines.

Selon d'autres modes de réalisation, l'ensemble selon l'invention peut comprendre une ou plusieurs des caractéristiques suivantes, prise(s) isolément ou selon toutes les combinaisons techniquement possibles :
- les montants sont fixés aux platines par vissage et/ou collage ;
- l'ensemble comprend deux platines, chaque platine reliant un longeron principal et un longeron auxiliaire et s'étendant sur toute la hauteur séparant le longeron principal du longeron auxiliaire, chaque montant étant appliqué sur la platine commune suivant sensiblement toute sa hauteur ;
- l'ensemble comprend en outre une poutre supérieure s'étendant transversalement entre les longerons principaux et distincte du bouclier pare-chocs ;
- une nervure d'absorption piéton se prolonge latéralement pour s'appliquer sur la poutre supérieure ;
- l'ensemble est un ensemble pare-chocs avant de véhicule automobile ; et
- l'ensemble est un ensemble pare-chocs arrière de véhicule automobile.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective éclatée d'un ensemble pare-chocs avant selon l'invention ;
- la figure 2 est une vue en coupe de côté de l'ensemble de la figure 1 ; et

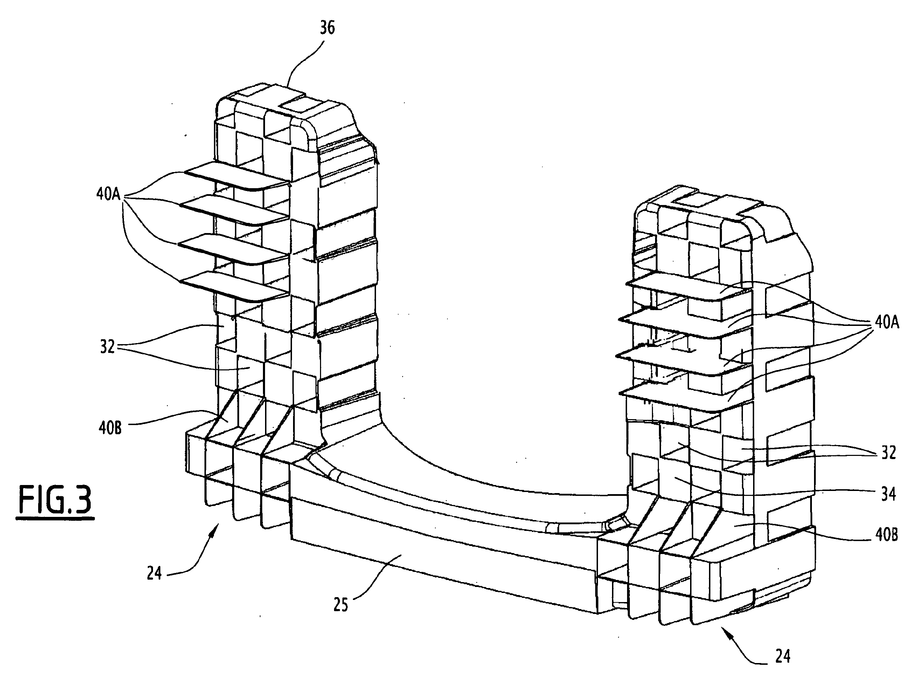

- la figure 3 est une vue en perspective de trois-quarts avant d'un bouclier pare-chocs avant de l'ensemble des figures 1 et 2 ;
- la figure 4 est une vue en perspective de trois-quarts arrière d'une variante du bouclier pare-chocs avant de l'ensemble des figures 1 et 2.

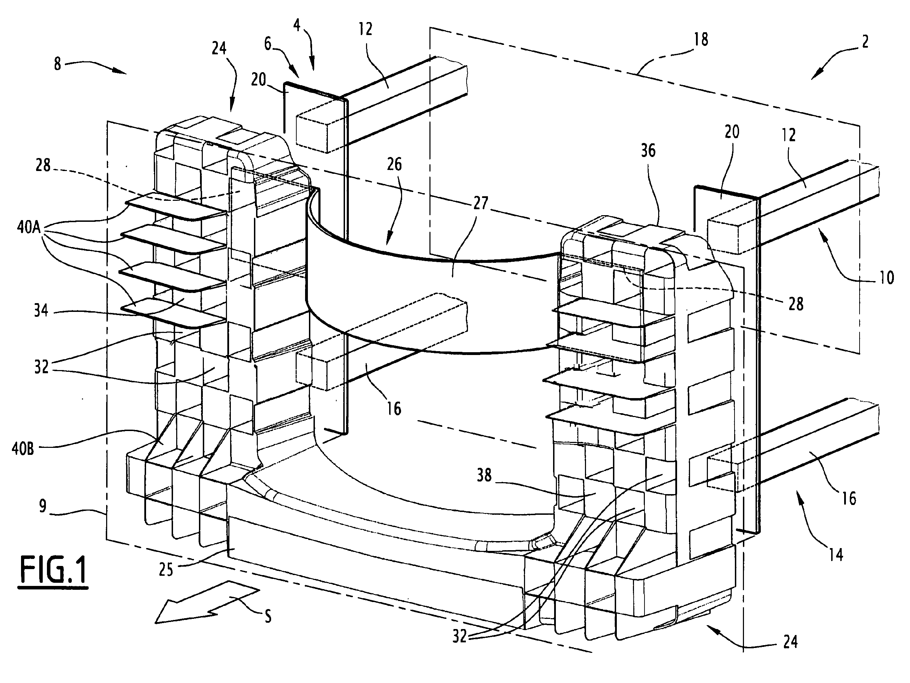

Par la suite, les termes d'orientation s'entendent par référence à l'orientation usuelle des véhicules automobiles, illustrée sur la figure 1 par la flèche S dirigée horizontalement vers l'avant suivant une direction longitudinale du véhicule automobile.

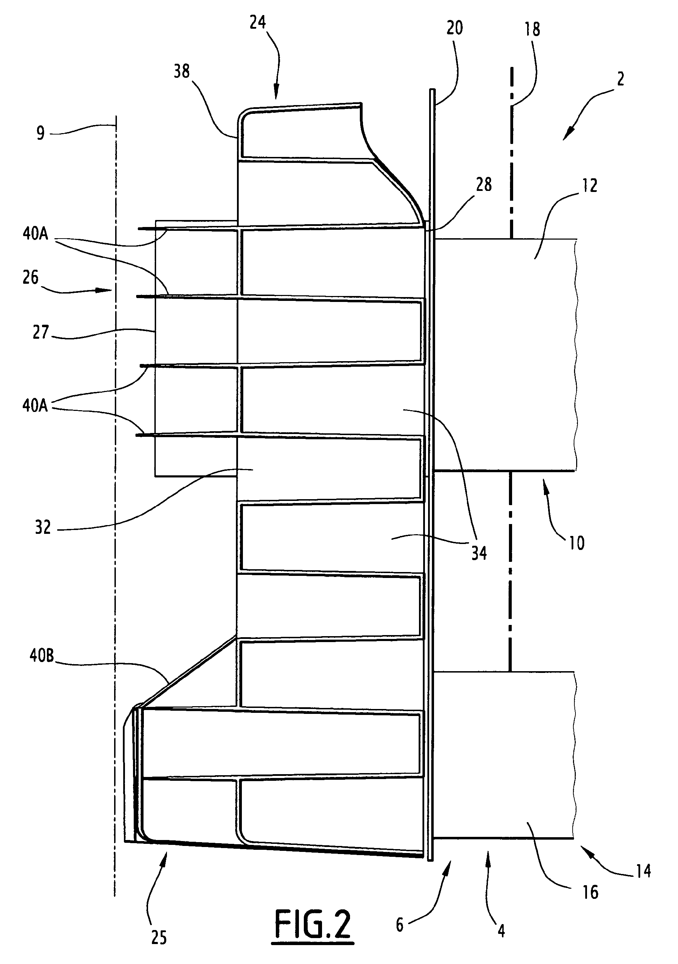

Tel que représenté sur les figures 1 et 2, un véhicule automobile 2 comprend un châssis 4 comprenant une partie avant 6, un bouclier 8 pare-chocs avant disposé à l'extrémité avant de la partie avant 6 pour protéger la partie avant 6 en cas de choc, et une peau 9 de pare-chocs pour recouvrir le bouclier 8.

La partie avant 6 comprend une voie haute 10 comprenant une paire de longerons principaux 12 et une voie basse 14 comprenant une paire de longerons auxiliaires 16.

Les longerons principaux 12 sont aussi nommés brancards.

Selon un mode de réalisation de l'invention, les longerons auxiliaires 16 sont des prolonges de berceau, s'étendant vers l'avant à partir d'un berceau fixé entre les longerons 16, par exemple un berceau moteur.

Les longerons auxiliaires 16 sont situés à une hauteur inférieure à celle des longerons principaux 12. Ils sont agencés au-dessous des longerons principaux 12, sensiblement dans le même plan longitudinal.

Les longerons principaux 12 s'étendent longitudinalement et sont espacés transversalement l'un de l'autre.

Les longerons auxiliaires 16 s'étendent longitudinalement et sont espacés transversalement l'un de l'autre. L'écartement transversal entre les longerons auxiliaires 16 est sensiblement égal à celui entre les longerons principaux 12.

Les longerons principaux 12 sont tarés pour encaisser une force axiale maximale sans flambement comprise entre 80kN et 100kN. Les longerons auxiliaires 16 sont tarés pour encaisser une force axiale maximale sans flambement comprise entre 25kN et 45kN. Sur certains véhicules aux gabarits éloignés de la moyenne, les fourchettes de tarage proposées peuvent différer légèrement, sans sortir du cadre de l'invention.

Les longerons principaux 12 sont prévus pour recevoir entre eux et supporter au moins en partie une face avant 18. La face avant 18 est représentée sur la figure 1 de façon schématique par un rectangle en traits mixte. De manière connue, la face avant 18 comprend un cadre de support portant des organes fonctionnels d'un système de refroidissement du groupe motopropulseur du véhicule et/ou d'un système de climatisation, tel qu'un ou plusieurs radiateurs ou un groupe motoventilateur.

La face avant 18 est fixée aux longerons principaux 12 et à des longerons d'aile supportant les ailes de la carrosserie, et situés au-dessus des longerons principaux et en retrait vers l'arrière par rapport aux longerons principaux 12.

La face avant 18 se situe en retrait vers l'arrière des extrémités avant des longerons principaux 12 et auxiliaires 16.

La partie avant 6 comprend une paire de platines 20 de fixation disposées aux extrémités avant des longerons principaux 12 et auxiliaires 16. Chaque platine 20 relie l'extrémité avant d'un longeron principal 12 à celle du longeron auxiliaire 16 adjacent situé du même côté. Chaque platine 20 présente la forme d'une plaque métallique s'étendant dans un plan transversal sensiblement vertical. Les platines 20 peuvent être réalisées en acier embouti, roulé, plié, ou encore en alliage léger.

La peau 9 est un élément de carrosserie avant du véhicule et définissant le galbe extérieur du véhicule.

Le bouclier 8 est disposé entre la peau 9, par laquelle il est recouvert, et la partie avant 6. Il a pour fonction d'absorber l'énergie de chocs à petite vitesse et de chocs à moyenne vitesse (Danner) de façon à préserver le châssis 4, et de protéger un piéton en cas de choc piéton.

Le bouclier 8 est disposé aux extrémités avant des longerons principaux 12 et auxiliaires 16 en étant fixé en appui longitudinal rigide contre les platines 20 sans interposition d'élément additionnel d'absorption d'énergie en cas de choc. Le bouclier 8 est disposé devant la face avant 18 de façon à la protéger, ainsi que les organes fonctionnels qu'elle porte.

Le bouclier 8 est monobloc en matière plastique et est formé de deux montants 24 et d'une poutre pare-chocs inférieure 25 située à hauteur de la voie basse 12 et reliant les deux montants 24 entre eux. Le bouclier 8 a une forme en U ouverte verticalement vers le haut conférée par les montants 24 et la poutre inférieure 25. Les montants 24 s'étendent vers le haut à partir des extrémités de la poutre inférieure 25.

Le véhicule 2 comprend également une poutre pare-chocs supérieure 26, s'étendant sensiblement transversalement et horizontalement et distincte du bouclier 8. Elle comprend une partie centrale 27, prolongée latéralement par deux parties de fixation 28. Les parties de fixation 28 sont en appui longitudinal contre la platine 20 de manière rigide en compression. Elles sont par exemple insérées longitudinalement entre les platines 20 et les montants 24 et sont avantageusement agencées en regard des longerons principaux 12. Les parties de fixation 28 sont fixées à la platine 20 par tout moyen de fixation connu, notamment par collage ou par soudage. Les parties de fixation 28 sont rigides et ne sont pas prévues pour absorber de l'énergie en cas de chocs. Elles se présentent par exemple sous la forme de plaques de tôle minces.

La partie centrale 27 est conçue de manière à travailler en flexion en réponse à un choc.

La poutre pare-chocs inférieure 25 s'étend sensiblement transversalement et horizontalement entre les montants 24. Elle a pour fonction de canaliser l'énergie d'un choc vers les montants 24 en cas de collision. La poutre pare-chocs inférieure 25, ou « poutre pare-chocs piéton », a également pour fonction de protéger la jambe du piéton en cas de choc piéton.

La poutre pare-chocs inférieure 25 est disposée pour venir impacter la jambe d'un piéton au-dessous du genou.

Avantageusement, la poutre pare-chocs inférieure 25 est plus rigide et avancée par rapport à la poutre pare-chocs supérieure 26 pour assurer une protection convenable au piéton.

La poutre inférieure 25 est adaptée pour travailler essentiellement en flexion en cas d'impact sur la poutre inférieure 25.

La poutre pare-chocs inférieure 25 possède une section en U ouverte horizontalement vers l'intérieur du véhicule, ici vers l'arrière.

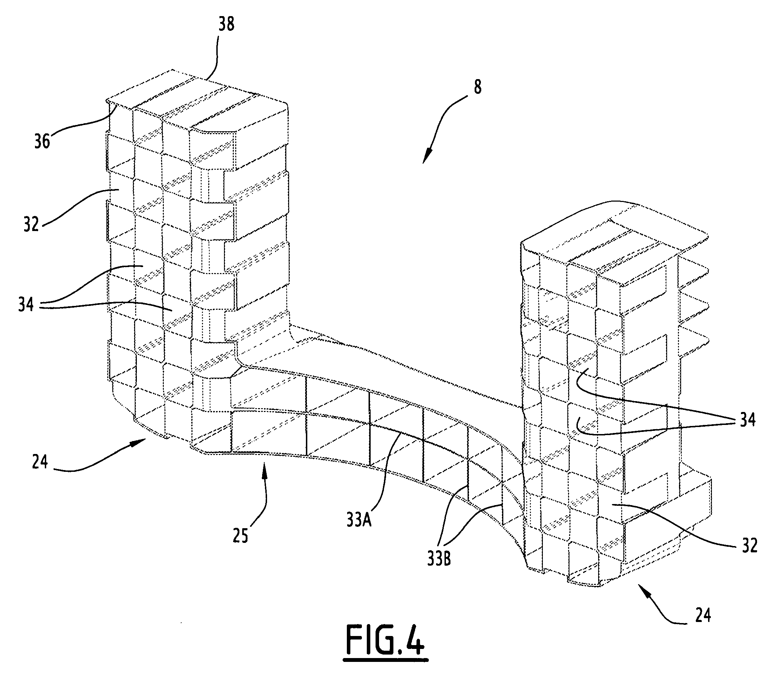

La figure 4 représente un bouclier pare-chocs 8 selon une variante, dans laquelle les montants 24 ont une hauteur inférieure à ceux du mode de réalisation représenté sur la figure 1.

En option, et comme illustré dans la variante de la figure 4, la poutre pare-chocs inférieure 25 selon les variantes des figures 1 et 4 comprend des nervures intérieures de rigidification pour conférer à la poutre pare-choc inférieure 25 la rigidité souhaitée. Telle que représentée sur la figure 4, la poutre pare-chocs inférieure 25 comprend une nervure horizontale 33A transversale et des nervures verticales 33B longitudinales.

Les montants 24 du bouclier 8 sont prévus pour faire office d'absorbeur d'énergie entre la peau 9 et les platines 20, et pour absorber l'énergie d'un choc sur le bouclier 8 à petite vitesse ou à moyenne vitesse (Danner). Chaque montant 24 est prévu pour travailler essentiellement en compression suivant la direction de choc, ici suivant la direction longitudinale du véhicule.

Ainsi, les montants 24 sont aptes à être fixés en appui rigide contre les platines 20, sans interposer des absorbeurs de choc additionnels rapportés entre les montants 24 et les platines 20.

Pour un véhicule automobile dont la masse est comprise entre 800 et 1200 kg, l'énergie à dissiper en cas de choc moyenne vitesse (Danner) est généralement comprise entre 6 et 12 kJ, avantageusement entre 7kJ et 10kJ. De préférence, chaque montant 24 est prévu pour absorber une énergie supérieure à 5 kJ en cas de choc moyenne vitesse (Danner), de préférence comprise entre 6 et 10kJ.

Chaque montant 24 présente une structure alvéolaire comprenant des alvéoles 32, 34 s'étendant longitudinalement entre une face arrière 36 et une face avant 38 des montants 24.

Chaque montant 24 comprend des alvéoles borgnes inversées comprenant des premières alvéoles 32 borgnes, fermées du côté de la face arrière 36 et ouvertes du côté de la face avant 38, et des deuxièmes alvéoles 34 borgnes ouvertes du côté de la face arrière 36 et fermées du côté de la face avant 24. Les premières alvéoles 32 et les deuxièmes alvéoles 34 sont disposées en quinconce (ou damier).

Chaque montant 24 est fixé sur la platine 20 correspondante, en appui longitudinal rigide sur la platine 20 sans interposition d'un élément d'absorption d'énergie. Chaque montant 24 recouvre la majeure partie de la surface d'appui offerte par la platine 20 correspondante.

Chaque montant 24 est fixé sur la platine 20 correspondante par vissage ou par collage.

Cette deuxième solution est avantageuse, dans la mesure où elle permet une bonne répartition des efforts. En effet, les contraintes de design liées à l'assemblage par vissage (insert métalliques, trous, semelles de rigidification, espaces pour les visseuses...) sont levées, tandis que les contraintes localisées et les risques d'arrachement causés par le vissage sont très fortement atténués. En outre, la géométrie choisie formée d'alvéoles borgnes inversées disposés en quinconces augmente considérablement la surface d'encollage à l'arrière des montants 24 et participe à la répartition favorable des efforts.

Les platines 20 de grande hauteur, ou platines géantes, raccordant chaque longeron principal 12 à un longeron auxiliaire 16, permettent de répartir la distribution des efforts encaissés par le bouclier 8 et la poutre supérieure 26 sur une hauteur importante dans le véhicule, grâce aux montants 24 s'étendant entre les voies haute 10 et basse 14.

Les platines 20 géantes offrent une surface d'appui rigide étendue aux montants 24, ce qui permet aux montants 24 de travailler uniformément en compression en cas de choc, sans flexion dans leur partie médiane située verticalement entre la voie haute 10 et la voie basse 14. Cet atout permet une conception homogène des montants 24, possédant des alvéoles analogues uniformément réparties, démoulables longitudinalement et destinées à travailler essentiellement en compression. L'architecture diffère donc radicalement des structures dépourvues de platines géantes, dont les montants doivent présenter un design destiné à un travail en flexion.

De ce fait, le véhicule muni d'un ensemble avant selon l'invention est moins intrusif lorsqu'il entre en contact avec un autre véhicule, ce qui bénéficie à la compatibilité inter-véhiculaire à basse et moyenne vitesse.

La dimension de l'appui offert par les platines 20 est avantageusement comprise entre 100 et 180 mm en largeur, et entre 350 et 450mm en hauteur, ce qui correspond à des aires globalement comprises entre 3,5 et 8 dm².

La structure alvéolaire des montants 24 facilite la fabrication et confère aux montants une capacité d'absorption d'énergie suffisante sur une profondeur (dimension suivant la direction longitudinale) faible.

Le bouclier 8 est obtenu d'un seul bloc par exemple par moulage par injection de matière plastique. Il peut être démoulé suivant une unique direction correspondant à la direction longitudinale du véhicule automobile lorsque le bouclier 8 est fixé sur le châssis 4. Ainsi, le bouclier 8 peut être obtenu de façon simple, avec un coût de fabrication faible. La structure alvéolaire des montants 24 permet des dépouilles faibles, voire nulles, ce qui limite le poids et le coût de fabrication du bouclier 8. Les pièces obtenues sont donc légères et présentent une économie de matière.

La structure alvéolaire des montants permet également de réduire les épaisseurs locales de parois délimitant les alvéoles 32, 34. Ainsi, cette épaisseur locale peut être réduite dans une gamme comprise entre 2,5 et 4 mm, avantageusement comprise entre 3 mm et 3,5 mm.

En outre, et d'une manière générale, le démoulage du bouclier 8 est facilité puisque les faibles dépouilles ou leur absence permet un démoulage par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, les dépouilles faibles voir nulles dans les montants 24 en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 12, 16 définie plus haut.

Il en résulte que l'énergie d'un choc peut être dissipée par compression des montants 24 moyennant une course réduite, et que la solution s'avère très compacte. Cette solution est donc particulièrement adaptée aux véhicules de faible cylindré présentant une course longitudinale d'absorption de choc inférieure à 250 mm, et notamment inférieure à 200 mm. Les montants 24 présentent une épaisseur longitudinale comprise entre 120 et 220 mm. Ceci permet une absorption d'énergie efficace, tout en limitant le porte-à-faux du bouclier 8 pris entre les platines 20 et l'extrémité avant du bouclier 8.

En option, l'absorption d'énergie en choc piéton peut être assurée par un ensemble de nervures 40A, 40B venues de matière avec le bouclier 8 faisant saillie vers l'avant à partir des montants 24, comme représenté sur la figure 1. Ces nervures 40A, 40B remplissent l'espace entre la peau 9 et les montants 24.

Elles sont relativement souples pour s'écraser longitudinalement plus facilement que les montants 24. Elles définissent ainsi une première zone d'absorption d'énergie plus souple à l'avant de chaque montant 24 plus rigide. Elles permettent ainsi d'absorber l'énergie d'un choc piéton sur une course proche de 50mm, en demeurant en dessous de 150 g de décélération.

Les nervures 40A, 40B ont par exemple une épaisseur verticale faible (<3mm) de façon à présenter une souplesse adéquate.

Tel que représenté sur la figure 1, le bouclier 8 comprend des nervures supérieures 40A sur les montants 24 sensiblement à hauteur de la poutre pare chocs supérieure 26 et des nervures inférieures 40B.

Les nervures supérieures 40A font saillie longitudinalement et sensiblement horizontalement à l'avant de la face avant 38 de chaque montant 24, sur toute la largeur du montant 24.

Les nervures inférieures 40B font saillie verticalement à l'avant des montants 24 dans une région des montants 24 située juste au dessus de la poutre inférieure 25.

Ces nervures avant 40A et 40B permettent de définir des zones d'absorption d'énergie souples en avant des montants 24 plus rigides, afin que lors d'un choc piéton médian ou latéral, la décélération demeure inférieure à la norme.

Dans des variantes, le bouclier 8 monobloc porte des blocs optiques additionnels (non représentés), des éléments (non représentés) de fixation de panneaux de la peau du bouclier, des éléments de fixation (non représentés) d'une calandre, ou des volets pilotés permettant d'être disposés derrière la calandre pour guider l'air de façon optimale.

Selon une autre variante de la présente invention, le bouclier 8 pare-chocs est un bouclier pare-chocs arrière, adapté à être agencé à l'extrémité arrière de la partie arrière du châssis du véhicule.

## Revendications

1. Bouclier pare-chocs pour véhicule automobile comprenant deux longerons principaux (12), deux longerons auxiliaires (16) disposés à une hauteur inférieure, ainsi que des platines (20) d'appui et de fixation disposées entre les extrémités des longerons (12, 16), le bouclier étant **caractérisé en ce qu'**il est monobloc en matière plastique et formé de deux montants (24) et d'une poutre inférieure (25) reliant les montants (24), les montants (24) étant configurés pour prendre appui sur les platines (20) de manière à faire office d'absorbeurs de chocs, la poutre inférieure (25) étant sensiblement à hauteur des longerons auxiliaires (16) et le bouclier (8) ayant une forme en U conférée par les montants (24) et la poutre inférieure (25),
**en ce que** les montants (24) présentent une structure alvéolaire formée d'alvéoles s'étendant longitudinalement au travers des montants (24) et débouchant sur la face arrière et/ou avant du bouclier,
et **en ce que** chaque montant (24) comprend des premières alvéoles (32) borgnes, fermées du côté de la face arrière (36) et ouvertes du côté de la face avant (38), et des deuxièmes alvéoles (34) borgnes ouvertes du côté de la face arrière (36) et fermées du côté de la face avant (38).

2. Bouclier pare-chocs selon la revendication 1, dans lequel les montants (24) possèdent une épaisseur comprise entre 120 et 220 mm.

3. Bouclier pare-chocs selon l'une quelconque des revendications précédentes, **caractérisé en ce qu'**il comprend au moins une nervure d'absorption piéton (40A, 40B) faisant saillie vers l'extérieur à partir d'un montant (24).

4. Ensemble de véhicule automobile, du type comprenant deux longerons principaux (12) et deux longerons auxiliaires (16) disposés à une hauteur inférieure et des platines (20) d'appui et de fixation disposées aux extrémités des longerons (12, 16), lequel comprend un bouclier (8) pare-chocs selon l'une des revendications précédentes, les montants (24) étant fixés en appui rigide contre les platines (20).

5. Ensemble selon la revendication 4, dans lequel les montants (24) sont fixés aux platines (20) par vissage et/ou collage.

6. Ensemble selon l'une quelconque des revendications 4 et 5, comprenant deux platines (20), chaque platine reliant un longeron principal (12) et un longeron auxiliaire (16) et s'étendant sur toute la hauteur séparant le longeron principal (12) du longeron auxiliaire (16), chaque montant (24) étant appliqué sur la platine commune (20) suivant sensiblement toute sa hauteur.

7. Ensemble selon l'une quelconque des revendications 4 à 6, lequel comprend en outre une poutre supérieure (26) s'étendant transversalement entre les longerons principaux (12) et distincte du bouclier pare-chocs (8).

8. Ensemble selon la revendication 7, en combinaison avec la revendication 3, **caractérisé en ce qu'**une nervure d'absorption piéton (40A) se prolonge latéralement pour s'appliquer sur la poutre supérieure (26).

9. Ensemble selon l'une des revendications 4 à 8, lequel est un ensemble pare-chocs avant de véhicule automobile.

10. Ensemble selon l'une des revendications 4 à 8, lequel est un ensemble pare-chocs arrière de véhicule automobile.

## Claims

1. Bumper bar for a motor vehicle comprising two main bars (12), two auxiliary bars (16) arranged at an internal height as well as supporting and fastening panels (20) arranged between the ends of the bars (12, 16), wherein the bumper bar is **characterised in that** it is made of plastic material in a single piece and formed from two struts (24) and a lower beam (25) connecting the struts (24), wherein the struts (24) arc configured to rest on the panels (20) in order to act as shock absorbers, the lower beam (25) is essentially at the level of the auxiliary bars (16) and the bumper bar (8) is configured in a U shape as a result of the struts (24) and the lower beam (25),
**in that** the struts (24) have a mesh structure formed from cells extending longitudinally across the struts (24) and opening onto the rear and/or front face of the bumper bar,
and **in that** each strut (24) has first blind cells (32) closed to the rear face (36) side and open to the front face (38) side, and second blind cells (34) open to the rear face (36) side and closed to the front face (38) side.

2. Bumper bar according to claim 1, in which the struts (24) have a thickness in the range of between 120 and 220 mm.

3. Bumper bar according to any one of the preceding claims, **characterised in that** it comprises at least one pedestrian impact absorption rib (40A, 40B) projecting outwards from a strut (24).

4. Motor vehicle assembly of the type comprising two main bars (12) and two auxiliary bars (16) arranged at an internal height and supporting and fastening panels (20) arranged at the ends of the bars (12, 16), which assembly comprises a bumper bar (8) according to one of the preceding claims, wherein the struts (24) are fastened to rigidly rest against the panels (20).

5. Assembly according to claim 4, in which the struts (24) are fastened to the panels (20) by bolt connection and/or gluing.

6. Assembly according to any one of claims 4 or 5, comprising two panels (20), wherein each panel connects a main bar (12) and an auxiliary bar (16) and extends over the entire height separating the main bar (12) from the auxiliary bar (16), wherein each strut (24) rests against the common panel (20) essentially over its entire height.

7. Assembly according to any one of claims 4 to 6, which additionally comprises an upper beam (26) that extends transversely between the main bars (12) and is separate from the bumper bar (8).

8. Assembly according to claim 7 in combination with claim 3, **characterised in that** a pedestrian impact absorption rib (40A) extends laterally to rest against the upper beam (26).

9. Assembly according to one of claims 4 to 8, which is a front bumper assembly for a motor vehicle.

10. Assembly according to one of claims 4 to 8, which is a rear bumper assembly for a motor vehicle.

## Patentansprüche

1. Stoßfängerabschirmung für Kraftfahrzeug, umfassend zwei Haupt-Längsträger (12), zwei Hilfs-Längsträger (16), die in einer geringeren Höhe angeordnet sind, sowie Stütz- und Befestigungsplatten (20), die zwischen den Enden der Längsträger (12, 16) angeordnet sind, wobei die Abschirmung **dadurch gekennzeichnet ist, dass** sie einstückig aus Kunststoff ist und aus zwei Holmen (24) und einem unteren Querträger (25), der die Holme (24) verbindet, gebildet ist, wobei die Holme (24) derart ausgestaltet sind, dass sie auf den Platten (20) zur Abstützung kommen, derart, dass sie als Stoßdämpfer dienen, wobei der untere Querträger (25) im Wesentlichen in Höhe der Hilfs-Längsträger (16) ist und wobei die Abschirmung (8) die Form eines U hat, das ihr durch die Holme (24) und den unteren Querträger (25) verliehen wird,
dadurch, dass die Holme (24) eine wabenförmige Struktur haben, die von Waben gebildet ist, die sich in Längsrichtung durch die Holme (24) hindurch erstrecken und an der Rückseite und/oder Vorderseite der Abschirmung ausmünden,
und dass jeder Holm (24) erste Blindwaben (32) umfasst, die auf der Seite der Rückseite (36) geschlossen und auf der Seite der Vorderseite (38) offen sind, und zweite Blindwaben (34) umfasst, die auf der Seite der Rückseite (36) offen und auf der Seite der Vorderseite (38) geschlossen sind.

2. Stoßfängerabschirmung nach Anspruch 1, wobei die Holme (24) eine Dicke zwischen 120 und 220 mm aufweisen.

3. Stoßfängerabschirmung nach einem der vorhergehenden Ansprüche, **dadurch gekennzeichnet, dass** sie mindestens eine Fußgänger-Absorptionsrippe (40A, 40B) umfasst, die von einem Holm (24) aus nach außen vorspringt

4. Anordnung für Kraftfahrzeug des Typs umfassend zwei Haupt-Längsträger (12) und zwei Hilfs-Längsträger (16), die in einer geringeren Höhe angeordnet sind, und Stütz- und Befestigungsplatten (20), die an den Enden der Längsträger (12, 16) angeordnet sind, wobei die Anordnung eine Stoßfängerabschirmung (8) nach einem der vorhergehenden Ansprüche umfasst, wobei die Holme (24) in starrer Auflage gegen die Platten (20) befestigt sind.

5. Anordnung nach Anspruch 4, wobei die Holm (24) an den Platten (20) durch Verschraubung und/oder Verklebung befestigt sind.

6. Anordnung nach einem der Ansprüche 4 und 5, umfassend zwei Platten (20), wobei jede Platte einen Haupt-Längsträger (12) und einen Hilfs-Längsträger (16) verbindet und sich über die gesamte Höhe erstreckt, wobei sie den Haupt-Längsträger (12) von dem Hilfe-Längsträger (16) trennt, wobei jeder Holm (24) auf die gemeinsame Platte (20) im Wesentlichen über seine gesamte Höhe aufgebracht ist.

7. Anordnung nach einem der Ansprüche 4 bis 6, wobei die Anordnung ferner einen oberen Querträger (26) umfasst, der sich in Querrichtung zwischen den Haupt-Längsträgern (12) und von der Stoßfängerabschirmung (8) getrennt erstreckt

8. Anordnung nach Anspruch 7, in Kombination mit Anspruch 3, **dadurch gekennzeichnet, dass** eine Fußgänger-Absorptionsrippe (40A) sich in seitlicher Richtung fortsetzt, um sich an den oberen Querträger (26) anzulegen.

9. Anordnung nach einem der Ansprüche 4 bis 8, die eine vordere Stoßfängeranordnung eines Kraftfahrzeugs ist

10. Anordnung nach einem der Ansprüche 4 bis 8, die eine hintere Stoßfängeranordnung eines Kraftfahrzeugs ist.
